# FASCICULE DE BREVET EUROPEEN

(11) **EP 1 336 289 B1**
(45) Date de publication et mention de la délivrance du brevet: **25.01.2012**
(21) Numéro de dépôt: 01997937.6
(22) Date de dépôt: 21.11.2001
(51) Int. Cl.: H04M 3/493

(54) **SYSTEME POUR L'ECHANGE D'INFORMATIONS ENTRE UN ABONNE ET UNE UNITE DE SERVICE**
SYSTEM ZUM INFORMATIONSAUSTAUSCH ZWISCHEN EINEM TEILNEHMER UND EINEM SERVICEDIENST
DATA EXCHANGE SYSTEM BETWEEN A SUBSCRIBER AND A SERVICE UNIT

(30) Priorité: 22.11.2000 FR 0015086
(43) Date de publication de la demande: 20.08.2003
(73) Titulaire: FRANCE TELECOM, 75015 Paris (FR)
(72) Inventeur: COTTET, Jean-Paul, F-75015 Paris (FR); DUPUY, René, F-92300 Levallois-Perret (FR); TOURNAILLE, Monique, F-75019 Paris (FR); PROUVEUR, Dominique, F-59000 Lille (FR)
(74) Mandataire: Loisel, Bertrand
(86) Numéro de dépôt international: PCT/FR2001/003673
(87) Numéro de publication internationale: WO 2002/043361

(56) Documents cités:
- EP-A- 0 924 916
- US-A- 5 771 280
- US-A- 6 009 149

## Description

La présente invention est relative à un serveur permettant de mettre en relation un demandeur de services avec un fournisseur de services désiré.

Il existe un grand nombre de serveurs qui d'une façon générale possèdent tous une interface homme-machine pour traiter la requête d'un demandeur de services et y répondre.

Ces serveurs peuvent se présenter sous des formes diverses, telles que serveur vocal ou autres.

Certains de ces serveurs nécessitent la présence d'opérateurs, par exemple pour la saisie au clavier de la requête du demandeur de services.

La réponse du serveur se présente sous la forme d'une liste de fournisseurs de services sélectionnés en fonction de la requête du demandeur.

De façon conventionnelle, la réponse est établie directement par le serveur contacté et plus rarement la requête est transférée vers un serveur intermédiaire qui établira la réponse à la place du serveur d'origine.

Lorsque le demandeur recherche un service de proximité tel qu'un service de dépannage ou d'urgence, les serveurs classiques sont mal adaptés.

En effet, la réponse est établie par le serveur interrogé sans tenir compte de la localisation géographique précise du lieu d'appel, ce qui peut conduire par exemple à proposer en premier les fournisseurs de services les plus éloignés géographiquement.

EP-A- 0 924 916 décrit un système de télécommunication capable d'offrir des services adaptés à la localisation des abonnés. La présente invention vise à remédier aux inconvénients des systèmes connus en créant un serveur assurant une mise en relation optimale du demandeur de service avec le fournisseur de service le mieux approprié.

Elle a donc pour objet un système permettant de mettre en relation un demandeur de services avec un fournisseur de services adapté, tel que défini dans la revendication 1.

L'invention sera mieux comprise à la lecture de la description qui va suivre, donnée uniquement à titre d'exemple et faite en se référant aux dessins annexés, sur lesquels:

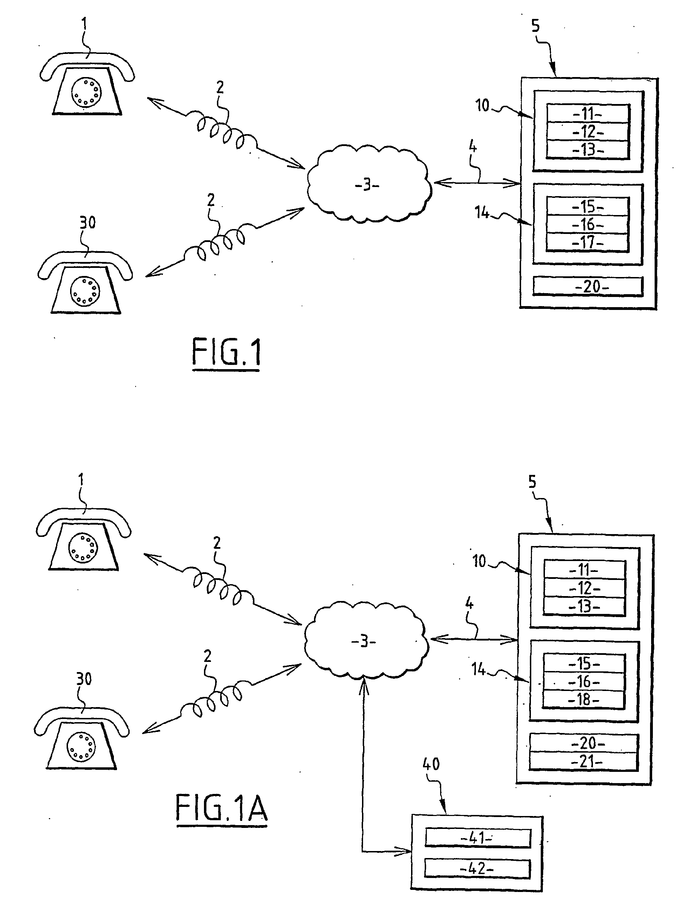

- la Fig.1 représente l'architecture de l'ensemble du système ;
- la Fig.1 a illustre l'architecture d'une variante du système faisant intervenir un serveur intermédiaire ; et
- la Fig.2 représente la mise en oeuvre de la présente invention dans un réseau intelligent du type Audiotel de France Télécom, à l'aide de publiphones.

La figure 1 représente un terminal de télécommunication 1 destiné à être utilisé par un demandeur de services.

Il peut s'agir d'un publiphone, un téléphone fixe, un téléphone portable ou un micro-ordinateur avec un modem.

Ce terminal est relié à un réseau intelligent 3 par une liaison point à point 2 dont les caractéristiques techniques dépendent de l'opérateur de télécommunication auquel on fait appel et du terminal utilisé.

Le réseau intelligent 3, est un réseau téléphonique d'un opérateur de télécommunication dans lequel l'origine de l'appel peut être identifiée.

Le réseau intelligent 3 est relié par une liaison 4 à un serveur 5. La liaison 4, en plus de véhiculer le signal émis par le demandeur de services transmet des informations supplémentaires et notamment un code d'origine permettant d'identifier l'origine de l'appel.

Les caractéristiques techniques de cette liaison dépendent une nouvelle fois de l'opérateur de télécommunication utilisé. Toutefois, des standards tels que RNIS, ont été définis et la majorité des opérateurs les respectent.

Le serveur 5 est un ordinateur sur lequel s'exécute un logiciel 10, réalisé par une programmation conventionnelle.

Le logiciel 10 comprend principalement trois modules :
- une interface homme-machine 11 permettant d'échanger des informations avec le demandeur de services ;
- un logiciel 12 de géolocalisation de l'adresse du terminal utilisé par le demandeur de services et de l'adresse des fournisseurs de services ;
- un module logiciel 13 de calcul de distance à partir des coordonnées géoréférencées d'un terminal utilisé par un demandeur de services et de coordonnées géoréférencées d'un fournisseur de services.

Le module logiciel 12 comporte les bases de données suivantes enregistrées dans des moyens de stockage d'informations 14 :
- une base de géoréférence 15 de type IGN permettant de positionner un objet, tel qu'un terminal de télécommunication, dans l'espace par des coordonnées XY de type Lambert 2 étendu. Cette base est utilisée par exemple pour associer des coordonnées géoréférencées à une adresse d'un terminal de télécommunication ou à une adresse de fournisseur de services,
- une base de données 16 contenant les coordonnées géoréférencées et un code d'origine pour chaque terminal de télécommunication utilisés pour communiquer avec le serveur,
- une base de données 17 contenant les coordonnées géoréférencées des fournisseurs de services, leur adresse postale, leurs coordonnées téléphoniques, et leur code d'activité.

Dans les bases de données 16 et 17, les données relatives aux coordonnées des terminaux de télécommunication utilisés et les données relatives aux coordonnées des fournisseurs de services peuvent être regroupées par zones géographiques comme par exemple des arrondissements de Paris.

D'autres bases de données facultatives peuvent aussi être rajoutées, par exemple une base de données d'informations générales telles que des flashs d'actualité ou autres.

Le serveur 5 est aussi équipé d'un moyen de redirection 20, destiné à renvoyer un appel vers un terminal de télécommunication d'un fournisseur de services 30. Les caractéristiques techniques de ce moyen sont déterminées par l'opérateur du réseau intelligent 3.

Le terminal de télécommunication 30 du fournisseur de services peut être un téléphone fixe, un téléphone portable, un micro-ordinateur avec un modem ou autres.

Selon une variante représentée à la figure 1a, la base de données 17 de fournisseurs de services est remplacée par une base de données 18 de serveurs intermédiaires 40 et le moyen de redirection 20 peut renvoyer un appel vers ces derniers.

Le serveur 5 comprend également des moyens 21 de transmission au serveur intermédiaire 40 d'informations tels que l'adresse du terminal utilisé par le demandeur de services.

Ces moyens 21 sont par exemple formés par un module logiciel permettant d'insérer des informations dans une trame d'un signa! respectant le standard RNIS.

La base de données 18 contient pour chaque serveur intermédiaire son adresse, son numéro de téléphone ainsi qu'un code identifiant son activité.

Le serveur intermédiaire 40 est un prestataire de services relié au réseau intelligent 3 et destiné à traiter la requête d'un demandeur de services. Il est équipé d'un moyen de réception 41 destiné à recevoir des informations transmises par le serveur 5 à l'aide des moyens 21.

Le cas échéant, il est aussi équipé d'un moyen de redirection 42 vers un autre serveur intermédiaire 40 ou vers le terminal de télécommunication d'un fournisseur de services 30.

Les caractéristiques techniques du serveur 40 sont déterminées par son opérateur.

Les caractéristiques techniques du moyen de réception 41 et des moyens de redirection 42, sont déterminées par l'opérateur du réseau intelligent 3.

De tels serveurs intermédiaires sont par exemples formés par des serveurs vocaux et/ou par des plates-formes d'opérateurs chargés de répondre aux appels des demandeurs de services et de traiter leur demande.

Il existe notamment des plates-formes d'opérateurs capables d'indiquer à un demandeur de services, un itinéraire à suivre pour se rendre d'un lieu géographique à un autre, par exemple la plate-forme d'opérateurs PIVI de l'entreprise RATP.

Les caractéristiques techniques des autres symboles de la figure 1 a ont déjà été décrits en référence à la figure 1.

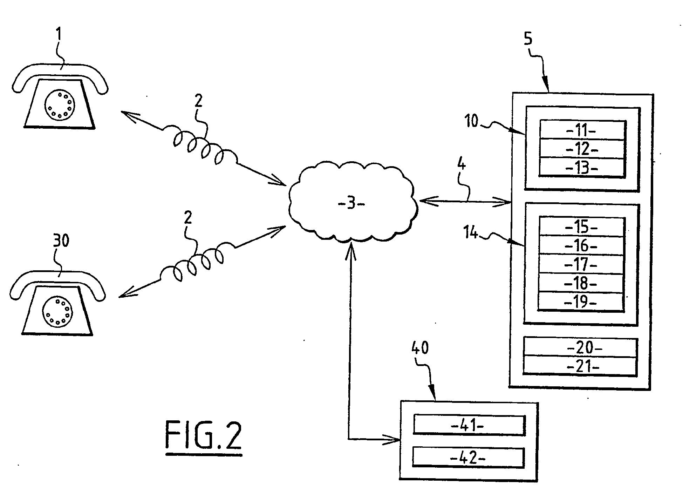

Dans le mode de réalisation préféré de l'invention représenté à la figure 2, le terminal de télécommunication 1 utilisé est un publiphone, relié au réseau intelligent 3 par la liaison 2 qui dans le présent exemple est une liaison point à point analogique.

Le réseau intelligent 3 utilisé est le réseau Audiotel de France Télécom. Ce réseau, en plus de présenter les caractéristiques précédentes d'un réseau intelligent intègre d'autres services tels que Audiotel et l'accès à des bases de données de renseignements telles que la base de données du "12" dont on verra l'intérêt plus loin.

La liaison 4 est une liaison Numéris de France Télécom. Cette liaison respecte le standard RNIS (Réseau Numérique à Intégration de Services).

Le serveur 5, le logiciel 10 et les bases de données de données présentent les caractéristiques techniques décrites en référence à la figure 1.

Toutefois, on notera que dans ce mode particulier de réalisation, l'interface homme-machine 11 est un serveur vocal et que la base de données 17 contenant les coordonnées géoréférencées des fournisseurs de services est utilisée simultanément avec la base de données 18 contenant les coordonnées géoréférencées des serveurs intermédiaires.

De plus, une base de données 19 contenant des informations d'ordre général est également utilisée.

Elle contient des informations telles que des flashs d'informations météo ou autres, ainsi que le code permettant d'identifier ces informations.

Le fonctionnement du système dont la structure a été présentée précédemment va être maintenant décrit à l'aide de la figure 1 dans le cas particulier d'une liaison 4 respectant le standard RNIS.

Le demandeur de services compose le numéro de téléphone du serveur 5 à l'aide du terminal de télécommunication 1. Le signal est acheminé jusqu'au réseau intelligent 3 par la liaison 2. Le réseau intelligent 3 transporte le signal jusqu'à la liaison 4 et le convertit en signal numérique en respectant le standard RNIS.

Ce signal numérique au format RNIS comporte des trames.

Chacune de ces trames comporte un code d'origine de l'appel, par exemple le numéro de téléphone du terminal de télécommunication utilisé par le demandeur de services.

Le logiciel de géolocalisation 12 extrait ce code d'origine des trames et sélectionne dans la base de données 16, l'adresse géographique du terminal de télécommunication ayant un code d'origine identique au code d'origine reçu et la mémorise.

Ensuite, le demandeur de services est mis en relation avec le serveur vocal 11. Le serveur vocal 11 permet de façon classique au demandeur de services de formuler sa requête, soit à l'aide des touches du clavier de son terminal de télécommunication, soit par la reconnaissance vocale de certains mots clés.

Cette requête permet d'identifier le code du service recherché. Le code du service recherché est ensuite transmis au logiciel de géolocalisation 12. Celui-ci à l'aide de cette information et du module logiciel 13 de calcul de distance, sélectionne dans la base de données 17, le fournisseur de services ayant un code d'activité identique au code de services recherché dont l'adresse géographique est la plus proche de l'adresse du terminal de télécommunication mémorisée.

Finalement, le moyen de redirection 20 est activé pour rediriger l'appel du demandeur de service directement vers le terminal 30 du fournisseur de service sélectionné.

Selon une variante du mode de réalisation de la présente invention représentée sur la figure 1 a, le serveur ne sélectionne pas lui-même le fournisseur de services, mais délègue cette tâche à un serveur intermédiaire 40.

Pour mettre en oeuvre ce mode de réalisation, la base de données 17 des adresses de fournisseurs de services, est remplacée par une base de données 18 d'adresses de serveurs intermédiaires.

Le fonctionnement de cette variante est identique au fonctionnement décrit à l'aide de la figure 1 jusqu'à la phase de détermination de l'adresse du terminal utilisé et d'identification du code du service recherché.

Ensuite, dans un premier temps, le logiciel de géolocalisation 12, sélectionne dans la base de données 18 le serveur intermédiaire 40 dont le code d'activité est identique au code du service recherché et dont l'adresse géographique est la plus proche de l'adresse du terminal de télécommunication mémorisée.

L'adresse du terminal de télécommunication utilisée est alors transmise par le moyen de transmission 21 au réseau intelligent 3 qui l'achemine jusqu'au moyen de réception 41 du serveur intermédiaire.

Finalement, le moyen de redirection 20 est activé pour rediriger l'appel du demandeur de service directement vers le terminal 30 du fournisseur de service sélectionné.

Ainsi, le serveur intermédiaire sélectionné est en mesure de traiter la demande du demandeur de services par des moyens qui lui sont propres, mais en ayant en plus à sa disposition, l'information sur l'origine géographique de l'appel.

A la fin du traitement de la requête du demandeur de services, le serveur intermédiaire met en relation par des moyens 42 qui lui sont propres, le demandeur de services directement avec le fournisseur de services.

Dans une autre variante, il est possible de combiner les deux modes de fonctionnement précédemment décrits à l'aide de la figure 1 et de la figure 1a.

Pour cela, les moyens nécessaires à chaque mode de fonctionnement sont réunis dans la même réalisation. Le logiciel de géolocalisation 12 est adapté de façon à rechercher la solution la mieux appropriée, à la fois dans la base de données 17 de fournisseurs de services et dans la base de données 18 de serveurs intermédiaires.

Le fonctionnement de cette variante dépend ainsi de la requête du demandeur de services.

Si suite à cette requête, un fournisseur de services est sélectionné par le logiciel de géolocalisation 12, le fonctionnement est identique à celui décrit à l'aide de la figure 1. Si au contraire, la requête conduit à sélectionner un serveur intermédiaire, le fonctionnement est identique à celui décrit à l'aide de la figure 1a.

Le fonctionnement du mode de réalisation représenté à la figure 2 est identique à celui décrit ci-dessus pour les éléments communs.

Toutefois, l'utilisation du réseau intelligent 3 de France Télécom, permet d'accéder à des services supplémentaires et notamment à un service de facturation et à des bases de données de renseignements, dénommées bases de données du "12".

Avec le service de facturation, le montant de la facture due pour l'utilisation du serveur 5 est prélevé directement par France Télécom à l'aide des modes de paiement usuels de cet opérateur.

Par exemple, dans le cas d'un publiphone, le mode de paiement pourra être la carte téléphonique. Par la suite; une partie de l'argent prélevé, est conservée par France Télécom pour rémunérer les coûts de télécommunication et l'autre partie est reversée à la société gérant le serveur 5. Ce service permet d'éviter d'utiliser sur le serveur 5, un module logiciel supplémentaire de facturation des services rendus.

La base de données du "12" comprend au moins le numéro de téléphone et l'adresse de l'ensemble des terminaux de télécommunication relié au réseau téléphonique de France Télécom.

Le logiciel de géolocalisation 12 du serveur 5 peut accéder via le réseau 3 à cette base de données et ainsi mettre à jour automatiquement, la base de données 16, des adresses géographiques des terminaux de télécommunication et la base de données 17 de fournisseur de services.

Cette possibilité de mise à jour de ses propres bases de données à partir d'une autre base de données accessibles par un réseau téléphonique fait partie des options standards d'un gestionnaire de base de données tel que les systèmes de gestion de base de données réparties.

Parmi les services fournis par le serveur décrit ci-dessus, un service vocal de guidage a été réalisé à l'aide d'un serveur intermédiaire spécialisé dans la recherche et l'indication d'itinéraires tel qu'un serveur vocal et la plate-forme d'opérateur PIVI de l'entreprise RATP.

Ainsi, lorsqu'un demandeur de service contacte le serveur 5 pour obtenir un itinéraire vers un fournisseur de service, le serveur 5 transmet à l'aide des moyens de transmission 21, l'adresse du terminal utilisé et l'adresse du fournisseur sélectionné au serveur vocal et à la plate-forme d'opérateurs PIVI.

Ensuite, l'appel du demandeur de service est automatiquement redirigé par le moyen 20 vers la plate-forme d'opérateurs qui, à partir de l'adresse du publiphone utilisé et celle du fournisseur de service, propose au demandeur un itinéraire à suivre pour se rendre jusqu'au service de proximité choisi.

Un exemple d'utilisation du mode de fonctionnement représenté à la figure 2 peut être le suivant.

Une mère de famille doit se rendre d'urgence en proche banlieue chez sa mère qui est très souffrante. Au moment de prendre le métro, elle se rappelle qu'il faut acheter un médicament pour sa mère. Elle entre dans le publiphone tel que 1 qui est en face de la bouche de métro et compose le numéro d'appel du serveur 5. Le module de géolocalisation 12 détermine l'adresse du publiphone. Le serveur 5 "décroche" et la mère de famille est mise en relation avec le serveur vocal 11. Le serveur vocal 11 lui propose une liste de rubriques aux choix. Parmi celles-ci, la mère de famille sélectionne : " je désire aller à la pharmacie de garde la plus proche." Le serveur 5 indique l'adresse de la pharmacie la plus proche et lui propose de la mettre en relation directe avec cette dernière ou de lui indiquer l'itinéraire pour s'y rendre à pieds. La mère de famille sélectionne ce dernier choix en appuyant sur une touche correspondante du clavier du publiphone et se rend jusqu'à la pharmacie de garde la plus proche. Une fois sortie de la pharmacie, la mère de famille est un peu désorientée et a des doutes sur l'itinéraire à suivre en transports en commun pour se rendre chez sa mère. Elle entre une nouvelle fois dans un publiphone tel que 1 qui se trouve à proximité de la pharmacie et compose le numéro d'appel du serveur 5. Le module de géolocalisation 12 détermine l'adresse du publiphone utilisé. Le serveur 5 "décroche" et la mère de famille est mise en relation avec le serveur vocal 11. A l'aide des touches du clavier du publiphone, la mère de famille sélectionne la rubrique : " je désire aller à un endroit précis" en appuyant sur une touche correspondante du clavier. Le serveur vocal lui propose ensuite deux nouveaux choix :
" désirez-vous vous rendre à l'endroit recherché en prenant un taxi" ou "désirez-vous faire votre choix parmi les autres rubriques précédentes".

La mère de famille sélectionne le premier choix en appuyant sur une touche du publiphone. Le serveur 5 transmet alors l'adresse du publiphone de la mère de famille à l'aide du moyen de transmission 21 à un serveur intermédiaire tel que 40 qui fait partie de la centrale de réservation de taxis la plus proche. Ensuite le serveur 5 génère un ordre de redirection de l'appel vers ce serveur intermédiaire, par son moyen de redirection 20.

La communication avec le serveur 5 est interrompue et la mère de famille est mise en relation directe avec le serveur intermédiaire de la centrale de réservation des taxis.

Cette dernière, grâce en outre à l'information fournie sur l'adresse du publiphone utilisé, et de ses moyens de redirection 42, redirige l'appel directement vers le poste téléphonique d'un taxi libre à proximité dudit publiphone. Ainsi, le conducteur du taxi libre peut répondre à sa future cliente.

Il apparaît donc qu'un système de mise en relation d'un demandeur de services avec un fournisseur de services selon l'invention précédemment décrit, permet de sélectionner la réponse la plus appropriée en fonction de la localisation géographique du demandeur et du fournisseur de services recherché.

## Revendications

1. Système permettant de mettre en relation un demandeur de services avec un fournisseur de services approprié, comprenant :
- un réseau intelligent (3),
- un terminal de télécommunication avec un serveur (5) destiné à être utilisé par le demandeur,
- le serveur (5) comprenant :
- une mémoire (14) contenant une liste (16) de toutes les adresses géographiques des terminaux de télécommunication avec le serveur (5), et
- des moyens pour sélectionner dans la liste (16) d`adresses celle du terminal de télécommunication utilisé par le demandeur de services, **caractérisé:**
- **en ce que** la mémoire (14) comprend une liste (18) de serveurs intermédiaires,
- **en ce que** le serveur (5) comprend :
- un moyen (12) pour sélectionner un serveur intermédiaire dans cette liste (18) de serveurs intermédiaires en fonction au moins de l'adresse géographique du terminal de télécommunication utilisé, et
- des moyens (21) de transmission, au serveur intermédiaire sélectionné de l'adresse du terminal utilisé par le demandeur de services, et
- **en ce que** le système comprend plusieurs serveurs intermédiaires (40) en mesure de traiter la demande du demandeur de services équipe chacun :
- d'un moyen de réception (41) destiné à recevoir les informations transmises par le serveur (5) à l'aide des moyens (21), et
- d'un moyen (42) de redirection de l'appel du demandeur de service vers un autre serveur intermédiaire (40) ou vers le terminal de télécommunication d'un fournisseur de services.

2. Système selon la revendication 1, **caractérisé en ce que** la mémoire (14) dudit serveur (5) comprend une liste (17) de fournisseurs de services et un moyen pour sélectionner dans cette liste au moins un fournisseur de services en fonction au moins de l'adresse géographique du terminal de télécommunication utilisé.

3. Système selon la revendication 2, **caractérisé en ce que** ledit serveur (5) comprend en outre un moyen (21) de transmission de l'adresse géographique du terminal utilisé vers les fournisseurs de services et **en ce que** chaque fournisseur de services comprend un moyen de réception de ladite adresse.

4. Système selon l'une quelconque des revendications précédentes, **caractérisé en ce que** le terminal de télécommunication (1) destiné à être utilisé par le demandeur est un publiphone.

5. Système selon la revendication 4, **caractérisé en ce que** le réseau intelligent (3) utilisé est le réseau Audiotel de France Télécom.

## Claims

1. System making it possible to place a requester of services in relation with a suitable supplier of services, comprising:
- an intelligent network (3),
- a telecommunication terminal with a server (5) designed to be used by the requester,
- the server (5) comprising:
- a memory (14) containing a list (16) of all the geographic addresses of the telecommunication terminals with the server (5), and
- means for selecting from the list (16) of addresses that of the telecommunication terminal used by the requester of services, **characterized:**
- **in that** the memory (14) comprises a list (18) of intermediate servers,
- **in that** the server (5) comprises:
- a means (12) for selecting an intermediate server from this list (18) of intermediate servers as a function of at least the geographic address of the telecommunication terminal used, and
- means (21) for transmission, to the selected intermediate server, of the address of the terminal used by the requester of services, and
- **in that** the system comprises several intermediate servers (40) capable of processing the request of the requester of services, each server being fitted:
- with a reception means (41) designed to receive the data transmitted by the server (5) with the aid of the means (21), and
- a means (42) for redirecting the call of the service requester to another intermediate server (40) or to the telecommunication terminal of a supplier of services.

2. System according to Claim 1, **characterized in that** the memory (14) of said server (5) comprises a list (17) of suppliers of services and a means for selecting from this list at least one supplier of services as a function of at least the geographic address of the telecommunication terminal used.

3. System according to Claim 2, **characterized in that** said server (5) also comprises a means (21) for transmission of the geographic address of the terminal used to the suppliers of services and **in that** each supplier of services comprises a means for reception of said address.

4. System according to any one of the preceding claims, **characterized in that** the telecommunication terminal (1) designed to be used by the requester is a public telephone.

5. System according to Claim 4, **characterized in that** the intelligent network (3) used is the Audiotel network of France Télécom.

## Patentansprüche

1. System, das es ermöglicht, einen Diensteanforderer mit einem geeigneten Diensteanbieter zu verbinden, das enthält:
- ein intelligentes Netzwerk (3),
- ein Endgerät zur Telekommunikation mit einem Server (5), das zur Verwendung durch den Anforderer bestimmt ist,
- wobei der Server (5) enthält:
- einen Speicher (14), der eine Liste (16) aller geographischen Adressen der Endgeräte zur Telekommunikation mit dem Server (5) enthält, und
- Einrichtungen, um aus der Adressenliste (16) diejenige des vom Diensteanforderer verwendeten Telekommunikationsendgeräts auszuwählen,
**dadurch gekennzeichnet:**
- **dass** der Speicher (14) eine Liste (18) von Zwischenservern enthält,
- **dass** der Server (5) enthält:
- eine Einrichtung (12) zur Auswahl eines Zwischenservers aus dieser Liste (18) von Zwischenservern abhängig mindestens von der geographischen Adresse des verwendeten Telekommunikationsendgeräts, und
- Einrichtungen (21) zur Übertragung der Adresse des vom Diensteanforderer verwendeten Endgeräts an den ausgewählten Zwischenserver, und
- **dass** das System mehrere Zwischenserver (40) enthält, die die Anforderung des Diensteanforderers verarbeiten können und je ausgestattet sind mit:
- einer Empfangseinrichtung (41), die dazu bestimmt ist, die vom Server (5) mit Hilfe der Einrichtungen (21} übertragenen Informationen zu empfangen, und
- einer Einrichtung (42) zur Umleitung des Anrufs des Dienstanforderers an einen anderen Zwischenserver (40) oder an das Telekommunikationsendgerät eines Diensteanbieters.

2. System nach Anspruch 1, **dadurch gekennzeichnet, dass** der Speicher (14) des Servers (5) eine Liste (17) von Diensteanbietern und eine Einrichtung zur Auswahl mindestens eines Diensteanbieters aus dieser Liste abhängig mindestens von der geographischen Adresse des verwendeten Telekommunikationsendgeräts enthält.

3. System nach Anspruch 2, **dadurch gekennzeichnet, dass** der Server (5) außerdem eine Einrichtung (21) zur Übertragung der geographischen Adresse des verwendeten Endgeräts an die Diensteanbieter enthält, und dass jeder Diensteanbieter eine Empfangseinrichtung der Adresse enthält.

4. System nach einem der vorhergehenden Ansprüche, **dadurch gekennzeichnet, dass** das Telekommunikationsendgerät (1), das dazu bestimmt ist, vom Anforderer verwendet zu werden, ein Kartentelefon ist.

5. System nach Anspruch 4, **dadurch gekennzeichnet, dass** das verwendete intelligente Netzwerk (3) das Audiotel-Netzwerk von France Télécom ist.
